# EUROPEAN PATENT APPLICATION

(11) **EP 2 080 780 A2**
(43) Date of publication of application: **22.07.2009**
(21) Application number: 09000704.8
(22) Date of filing: 20.01.2009
(51) Int. Cl.: C08J 3/09, C08L 25/10, C08L 53/02

(54) **Procedure for attaining styrene-ethylene-butadiene-sytrene copolymer products and styrene-ethylene-propylene-styrene copolymer products**

(30) Priority: 21.01.2008 IT PD20080020
(71) Applicant: Alen Chimica s.a.s., 35010 Vigonza (PD) (IT); New Wind S.r.l., 72017 Ostuni (BR) (IT)
(72) Inventor: Rossi, Radames, 35010 Vigonza PD (IT)

(57) **Abstract**

This is a procedure for obtaining gel products coming from the mixture of SEBS and/or DEPS copolymers with the appropriate additives, which in the molten state fills thermostated open moulds, with the application of a fibrous support to the free surface of the molten gel through a wetting process.

## Description

The field of the invention concerns a new procedure for obtaining styrene-ethylene-butadiene-styrene copolymer products and styrene-ethylene-propylene-styrene copolymer products.

At present, in order to obtain polymer-based products an injection method is used, starting with the relative granule and using special moulds.

It is common knowledge that the characteristics of the products are related to the type of polymer granules used and to the relative process for making said granules.

The characteristics of the products attained using injection moulding are a type of rubber with a certain hardness that cannot be compared to the softness of a gel.

Moreover, because of their hardness they cannot be classified and used as anti-decubitus materials.

In order to be used as anti-decubitus materials the softness has to be like that of a gel.

Such products often need to be joined to one another, something that is notoriously impossible to do.

With the injection moulding procedure using polymer granules it is not possible to inexpensively limit oneself to obtaining small amounts of products with different shapes and dimensions, both because of the high costs of the moulds and because of the restricted diversity of the granule that is produced for any large changes in quantities.

Moreover, with the procedure described above it is not possible to apply, on areas of the surface of the products, any fibrous supports directly incorporated through wetting with the material still molten before solidification, with the need to resort to less effective and more expensive means.

The aim of this patent is to obtain products with copolymers in an inexpensive way without the limitations mentioned above with regard to injection moulding using granules, namely with properties (like softness, hardness, colour, shape and size) that can be different also for small amounts of product.

The patent in question can be obtained with the methods and with the following chemical elements:
a) styrene-ethylene-butadiene-styrene copolymers (called hereafter simply SEBS) with parts by weight of between 10 and 15%;
   and/or
   styrene-ethylene-propylene-styrene copolymers (called hereafter simply SEPS) with parts by weight of between 15 and 17%;
b) paraffin or aromatic oil with parts by weight varying between 83 to 70%;
c) stabilisers with parts by weight between 0.25 and 0.5%;
c) anti-oxidants with parts by weight between 0.25 and 0.5%;
c) viscosity modifiers with parts by weight between 0.25 and 0.5%;
c) deaereators with parts by weight between 0.1 and 0.3%;
g) soluble colorants in sufficient parts.

Such methods use inexpensive moulds, since they do not have to withstand high pressures that are a part of injection moulding processes.

Said moulds that use gravity filling are fitted with cavities to be thermostated for temperatures that are not excessively high, and which generally do not exceed 200°C

Other devices used are a mixer, preferably fitted with a high capacity turbine, three-paddle or helix mixer, splined onto a variable speed motor or else on a motor fitted with an inverter.

The basic formulation of the elements to be used in the mixture production cycle are those listed earlier.

Once the formulation has been decided, by adopting the various elements mentioned above and by varying their dosages according to the requirements of the products to be obtained, staying within the ranges laid out above, or falling just outside them by a few percentage points, the right amount of oil is put in and the heating is started with slow mixing.

If needed, also pre-weighed amounts of anti-oxidants and stabilisers can be added.

Once a temperature of about 160-170°C has been reached a steady flow of SEBS and/or SEPS copolymers is added, taking care that no lumps form (non-gellified copolymers) that are difficult to dissolve.

Once the dissolution process has been completed, the solution is transparent.

At this point the addition of colorants pastes could be carried out, which would be weighed out beforehand, in order to obtain the desired colour.

Density modifiers could also be added and the agitation speed could be increased to complete the homogenisation of the mass.

Once all the mass has dissolved the rotation speed should be brought up to 30-40 revolutions a minute and if necessary the deaereator can be added.

The temperature and the stirring is maintained for about ten minutes, after which the product is ready to be poured into the appropriate moulds.

The casting moulds are thermostated at about 160-170 °C in a homogeneous manner so as to avoid local overheating and under-cooling that is harmful for the product, and more precisely the former because it can cause thermal decomposition and the formation of malodorous and damaged products and the latter because it might not allow the mould to be completely filled.

Once the production process and the temperature control have been optimised, the molten material is cast, providing for a volume that is cast that is slightly higher by 8-10% than the capacity of the mould, in order to avoid empty areas due to shrinkage.

Once the casting is completed, the excess material is mechanically collected and made to flow in the channels on the sides of the mould that are there precisely for this excess product.

At this point in the procedure it is possible to directly join fabric or other material to the product.

When the cast material is still in a molten state the upper part of the mould that is open is covered with the material to be bound (jersey, cotton, etc.) as a subsequent support of the product, and a perfect connection is made using special rollers that should be soft, so as to get an even wetting of said material.

The result will be a perfect fixing of the copolymer gel to said support material, once the gel has solidified.

At the end of the operations the cooling system is started up to cool the mould.

Once a temperature of about 40°C has been reached the cooling is stopped and the piece can be removed from the die.

At this point, now that the production cycle has been completed, a new cycle can be started.

At this point it should be pointed out that the components that are essential for obtaining the gel that is the object of the invention are paraffin and/or aromatic oil, the amount used being in the order of about 80% in weight, and the SEBS and/or SEPS copolymers, the amount used being in the order of about 20% in weight.

The use of SEBS copolymers provides a gel that is much softer than that obtained with SEPS copolymers.

The other elements, like the stabilisers and the anti-oxidants, which can be added to the oil in fractions of 1% in weight before the copolymers are added, have the function of stabilising the components that have been introduced and of preventing the phenomenon of detrimental oxidisations.

The colorant, which is an optional element to do with colour selection, as well as with regard to the amount for obtaining the desired colour for the gel product attained at the end of the process, should be put into the mixture while still molten at a temperature of 160 - 170° C.

Any viscosity modifiers, which should be added to the molten mixture at a temperature of 160 - 170° C, are used to promote the fluidity in order to improve the subsequent filling of the mould.

The deaereators should be added, if needed, at the same time as the viscosity modifiers in order to eliminate any gas bubbles.

As we can see, the considerable advantages that can be drawn from this patent, which allows the components to be varied from time to time also for small runs, while staying within the established range in order to obtain properties of the products that meet market requirements for such products.

Another considerable benefit lies in the hardness of the gel goods obtained from the patent process, which is around 2-40 Shöre 00 compared to products obtained through injection of the granules, which is in the order at least 30 Shöre A or greater.

This has the advantage of allowing you to work with a broad range of colours for the products.

An application of this patent concerns a product with one layer to be applied, for example, to the polyurethane back of a chair to improve it, not so much from an aesthetic viewpoint, but rather from a functional viewpoint, to facilitate the transpiration of those using the chair, with an effective anti-decubitus result.

What has been described above can be clarified by examining the attached drawings.
Fig. 1 is a plan view of an example of a product.
Fig 2 is the axonometric view relative to Fig. 1.

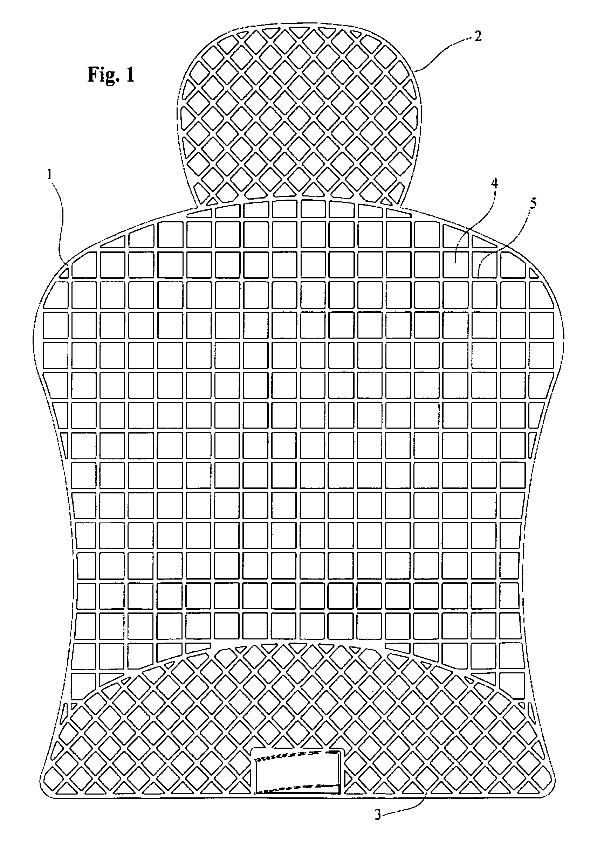

Fig. 1 shows a product regarding the part that is applied as a cover to the soft polyurethane padding of the back of a chair.

Since the filling of the die is done through gravity, the product can be made with cross-linked grooving. As mentioned in the description, on the surface of the die, which is open and when the material is still in a molten state, a fibrous support of fabric, or another material, is applied that joins to the molten material through wetting, so that when the material gels is creates a valid support for the product when it comes out of the die. Said support lends itself well to the gluing of the product onto the surfaces on which it has to be applied.

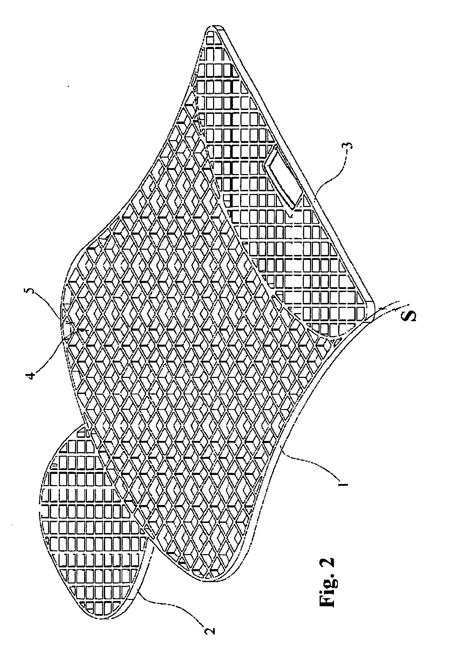

With particular reference to Fig. 2, it emerges that the product in the shape of a back for a chair comprises part 1 of the back itself, part 2 regarding the headrest, and the lower part 3 for the bottom. Where S indicates the thickness, the dimensions of the applied support is not shown. The cross-linked grooving 5 and the hollows 4, created by the grooving, involve all the parts 1, 2 and 3.

After what has been shown above, it seems clear that the patent is novel, the procedure and the product attained being original and inventive because the attainment of the product involves particular characteristics that have not been seen before.

## Claims

1. Procedure for obtaining styrene-ethylene-butadiene-styrene (SEBS) copolymer goods, **characterised by** the fact that the basic chemical formulation for obtaining the molten material for the gravity filling of the moulds is composed of:
a) SEBS copolymers with parts by weight of between 10 and 22%;
b) paraffin or aromatic oil with parts by weight varying between 90 to 70%;

2. Procedure for obtaining SEBS copolymer products according to claim 1, **characterised by** the fact that the percentage of the SEBS copolymer is preferably between 15 and 17% and the paraffin or aromatic oil with parts by weight varying between 83 and 70%.

3. Procedure for obtaining styrene-ethylene-propylene-styrene (SEPS) copolymer goods, **characterised by** the fact that the basic chemical formulation for obtaining the molten material for the gravity filling of the moulds is composed of:
a) SEPS copolymers with parts by weight of between 5 and 20%
b) Paraffin or aromatic oil with parts by weight varying between 95 to 70%;

4. Procedure for obtaining SEPS copolymer products according to claim 3, **characterised by** the fact that the percentage of the SEPS copolymer is preferably between 10 and 15% and the paraffin or aromatic oil with parts by weight varying between 83 and 70%.

5. Procedure for obtaining styrene-ethylene-butadiene-styrene copolymer products and styrene-ethylene-propylene-styrene copolymer products according to one of the preceding claims, **characterised by** the fact that the basic chemical formulation for obtaining the casting material contains one or more of the following elements:
c) Stabilisers with parts by weight between 0.25 and 0.5%;
d) Anti-oxidants with parts by weight between 0.25 and 0.5%;
e) Viscosity modifiers with parts by weight between 0.1 and 0.5%
f) Deaereators with parts by weight between 0.1 and 0.3%
g) Soluble colorants in sufficient parts.

6. Procedure for obtaining styrene-ethylene-butadiene-styrene copolymer products and styrene-ethylene-propylene-styrene copolymer products according to one or more of the previous claims, **characterised by** the following steps:
- insertion of the paraffin and/or aromatic oils into a mixer, possibly already heated by steam or hot water;
- reaching the temperature of 160-170°C
- addition of the SEBs and/or SEPS copolymers;

7. Procedure for obtaining styrene-ethylene-butadiene-styrene copolymer products and styrene-ethylene-propylene-styrene copolymer products in accordance with claim 6 modified by the fact that before the copolymers one or more of the following ingredients are added:
- anti-oxidants
- stabilisers

8. Procedure for obtaining styrene-ethylene-butadiene-styrene copolymer products and styrene-ethylene-propylene-styrene copolymer products in accordance with claim 6 or 7 modified by the fact that before the copolymers one or more of the following ingredients are added:
- colorant paste;
- viscosity modifier;
- deaereator.

9. Procedure for obtaining styrene-ethylene-butadiene-styrene copolymer products and styrene-ethylene-propylene-styrene copolymer products according to one or more of the previous claims, **characterised by** the fact that once the mould is filled, a fibrous element, made of cloth or another material, is applied to the free surface of the molten material and pressed until wet so as to obtain, when the gel has solidified, a valid support for the product when it is taken out of the mould.

10. Procedure for obtaining styrene-ethylene-butadiene-styrene copolymer products and styrene-ethylene-propylene-styrene copolymer products according to one of the preceding claims,
**characterised by** the fact that the mould can be open to the air and at the same time fitted with devices for uniform heat control.

11. Products obtained according to the above procedure explained in one or more of the previous claims, **characterised by** the fact of having a hardness around 2-40 Shöre 00.

12. Procedure for obtaining styrene-ethylene-butadiene-styrene copolymer products and styrene-ethylene-propylene-styrene copolymer products according to one or more of the previous claims, **characterised by** the fact that fabric, or another material, is directly joined to the product by covering the open mould with the material to be joined (jersey, cotton, etc.) and the pressing of said material onto the cast material that is still in a molten state.
